Europäisches Patentamt

European Patent Office

Office européen des brevets

(11) Publication number: 0 365 057
A1

# EUROPEAN PATENT APPLICATION

(21) Application number: 89123372.8

(22) Date of filing: 02.04.86

(51) Int. Cl.⁵: **H01B 1/24 , C08K 3/04 , B29C 67/12 , B29C 61/00**

(30) Priority: 02.04.85 US 720118

(43) Date of publication of application:
25.04.90 Bulletin 90/17

(60) Publication number of the earlier application in accordance with Art.76 EPC: 0 197 759

(84) Designated Contracting States:
AT BE CH DE FR GB IT LI NL SE

(71) Applicant: **RAYCHEM CORPORATION**
**300 Constitution Drive**
**Menlo Park California 94025(US)**

(72) Inventor: **Soni, Pravin L.**
**4811 Kenwood Street**
**Union City California 94587(US)**
Inventor: **Edwards, Larry**
**4296 Lorren Drive**
**Fremont California 94536(US)**
Inventor: **Rowlands, Ceinwen**
**6 Abingdon Court Lane Cricklade**
**Swindon Wiltshire(GB)**
Inventor: **Wartenberg, Mark**
**4960 Paseo Tranquillo**
**San Jose California 95118(US)**

(74) Representative: **Auckland, Jacqueline et al**
**Raychem Limited Intellectual Property Law**
**Department Faraday Road Dorcan**
**Swindon, Wiltshire SN3 5HH(GB)**

(54) **Conductive polymer compositions.**

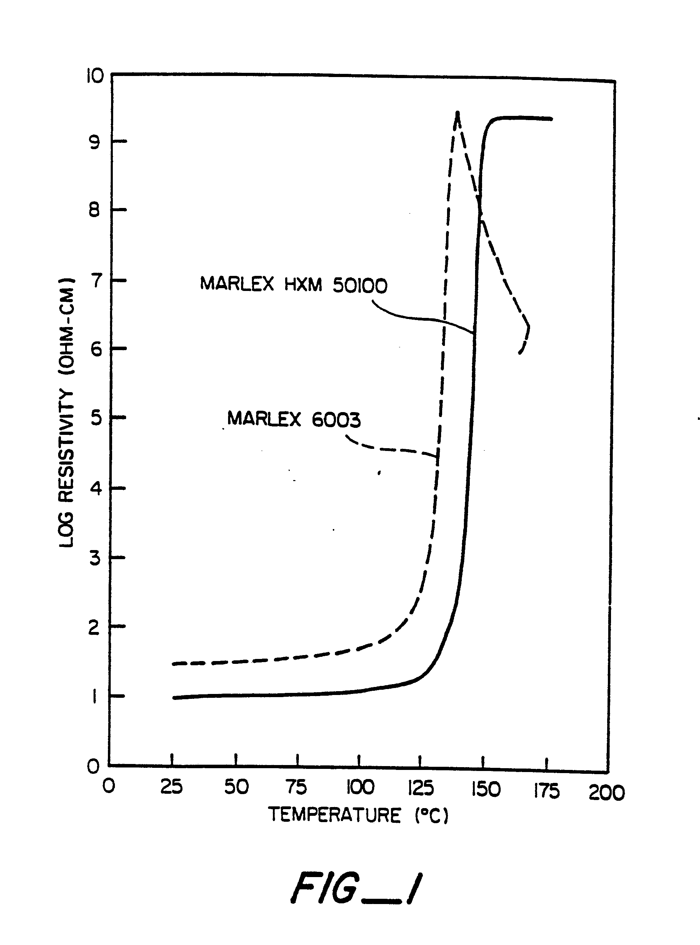

(57) A composition which comprises a polymer having a molecular weight greater than 150,000, and which is melt processable. Such compositions have surprisingly good physical and/or electrical properties. Preferably the composition comprises polyethylene or polyvinylidene fluoride. Figure 1 compares the resistivity/temperature characteristics of a PTC composition of the invention and of a comparable PTC composition of the prior art.

EP 0 365 057 A1

## CONDUCTIVE POLYMER COMPOSITIONS

This invention relates to conductive polymer compositions.

Conductive polymer compositions are well known and typically comprise an organic polymer component, and, dispersed (or otherwise distributed) in the organic polymer component, a particulate conductive filler. The term "particulate" is used herein to include particles of any shape, including particles of high and low aspect ratios, e.g. spherical, plate-like and acicular.

Conductive polymer compositions exhibiting PTC behavior, and electrical devices comprising them, are well known. Reference may be made, for example, to U.S. Patent Nos. 2,952,761; 2,978,665; 3,243,753; 3,351,882; 3,571,777; 3,757,086; 3,793,716; 3,823,217; 3,858,144; 3,861,029; 3,914,363; 3,950,604; 4,017,715; 4,072,848; 4,085,286; 4,117,312; 4,177,376; 4,177,446; 4,188,276; 4,237,441; 4,238,812; 4,242,573; 4,246,468; 4,250,400; 4,252,692; 4,255,698; 4,271,350; 4,272,471; 4,304,987; 4,309,596; 4,309,597; 4,314,230; 4,314,231; 4,315,237, 4,317,027, 4,318,881, 4,327,351, 4,330,704; 4,330,633; 4,334,148; 4,334,351, 4,352,083; 4,361,799; 4,388,607; 4,398,084; 4,413,301; 4,421,582; 4,425,497; 4,426,339; 4,426,633; 4,427,877; 4,429,216, 4,435,639; 4,429,216; 4,442,139; 4,450,496; 4,459,473; 4,470,898; 4,473,450; 4,481,498; 4,502,929; 4,506,259; 4,514,620; 4,517,449; 4,529,866; 4,534,889; 4,545,296; 4,560,498; 4,562,313, 4,570,055, 4,574,188; and J. Applied Polymer Science 19, 813-815 (1975), Klason and Kubat; Polymer Engineering and Science 18, 649-653 (1978), Narkis et al; and European Application Nos. 38,713, 38,714, 38,718; 74,281, 92,406. 119,807, 134,145, 157,640, 84,304,502.2, 84,307,984.9, 85,300,415.8, 85,306,476.4 and 85,306,477.2.

Known conductive polymers include those which are made by sintering a composition which includes one of the ultra high molecular weight (UHMW) polymers, typically having a molecular weight greater than 3 million, particularly ultra high molecular weight polyethylene (UHMWPE). Such sintered compositions have great advantages for certain uses, but they cannot be melt-processed, which is a major disadvantage .

We have now discovered that conductive polymers in which the polymeric component comprises a melt-processable polymer having a molecular weight greater than 150,000 have a valuable and suprising combination of physical and electrical properties.

The present invention provides a melt-processable composition comprising an organic polymer having a molecular weight greater than 150,000 and a particulate conductive filler dispersed in the polymer, and melt-processed articles obtained from such compositions. The term "melt-processable" as used herein means that the composition can be shaped by methods in which the whole of the polymer is in the molten state, in particular melt extrusion and moulding.

The articles of the present invention have surprisingly improved physical and/or electrical properties, compared to articles made from polymers of lower molecular weight, for example one or more of greater elongation to break, greater peel strength, improved resistance/temperature characteristics (for PTC compositions), greater impact strength, greater toughness, greater flexibility, greater split resistance, and greater electrical fatigue resistance.

The polymeric component in the novel compositions comprises at least one organic polymer, preferably polyethylene, having a molecular weight greater than 150,000, preferably 150,000 to 600,000, more preferably 200,000 to 400,000. This high molecular weight polymer (referred to herein as the HMW polymer) is preferably substantially the sole polymer. However, the polymeric component can contain one or more other polymers, which may be crystalline or amorphous, thermoplastic or crystalline. If such other polymers are present, the amount thereof is preferably less than 30%, particularly less than 10%. Commercially available HMW polyethylenes include Marlex HXM 50100, Soflex G46, Hoechst GM9255F, and Hoechst GR7255P, which have molecular weights of $2.03 \times 10^5$, $2.52 \times 10^5$, $2.58 \times 10^5$ and $3.17 \times 10^5$ respectively. Other HMW polymers include polypropylene; olefin copolymers; fluoropolymers, for example polyvinylidene fluoride, perfluoroalkoxypolymers, ethylenetetrafluoroethylene copolymers, fluorinated ethylene/propylene copolymers and ethylenechlorotrifluoroethylene copolymers; polyesters, for example polyethyleneterephthalate and polybutyleneterephthalate; and polyarylenes, for example polyetheretherketones. The molecular weight of the HMW polymer is preferably at least 85 percent of the weight average molecular weight of the highest molecular weight melt-processable polymer of that type. Molecular weights given herein for HMW polyethylene are measured using the following gel permeation method. Polyethylene is ground into a powder, and to 30 mg of the powder, 10 ml. of 1,2,4 trichlorobenzene containing an antioxidant to prevent polymer degradation are added. The solution is heated for 15 minutes to dissolve the polyethylene while stirring under nitrogen flow. The solution is filtered and then placed in a high temperature gel permeation chromatography instrument (Waters Model 150C) at a temperature of 145°C. The eluent is monitored by differential refractometry. The chromatographic instrument is calibrated using standard samples supplied by the U.S. National Bureau of Standards.

For other polymers, a similar test may be carried out, using different control standards for the chromatographic instrument and different temperatures.

Other parameters which can be used to indicate the molecular weight of the polymer include its melt index (which decreases as the molecular weight increases) and viscosity (which increases as the molecular weight increases). Particularly for polyolefins, especially polyethylene, the HMW polymer preferably has a high load melt index (HLMI), measured by ASTM D1238 Condition F, 190/21.6, of less than 30, particularly less than 25, especially less than 20. Particularly for fluoropolymers, especially polyvinylidene fluoride, the polymer preferably has a complex viscosity, measured by dynamic measurement at 10 radians/second frequency at a temperature of 260°C, of $5 \times 10^5$ to $0.8 \times 10^4$ poise.

Articles of the present invention may be recoverable articles, preferably heat-recoverable articles, which can be made, for example, by heating an article, deforming it into a heat-unstable shape and cooling it in the deformed condition, shape, so that reheating will cause it to recover towards its predeformed, heat stable, shape.

The compositions of the invention may be cross-linked after they have been melt-shaped. This improves the physical properties of the article. Where the article is heat-recoverable, it is preferably crosslinked before the deformation step in order to enhance recoverability, and so that it can be deformed above its melting point. Cross-linking may be effected by radiation, preferably to a dose of 3 to 20 Mrads, or by chemical curing. A particularly useful radiation cross-linking process is that disclosed in the application corresponding to U.S. Serial No. 711,910 (MPO1044). Table 1 below shows the results of tests carried out on uncross-linked samples of HMWPE comprising 75 wt% Marlex HXM 50100, 24 wt% Ketjenblack (conductive carbon filler) and 1 wt% antioxidant, and identical samples which had been irradiated to a dose of 3 Mrads.

Table 1

|  | Uncross-linked | Cross-linked |
|---|---|---|
| Tensile Strength (N/mm²) | 31.8 | 44.1 |
| 2% modulus (N/mm²) | 813 | 1000 |
| Ultimate elongation (%) | 7.8 | 15 |

| Notched Impact Strength | | | |
|---|---|---|---|
| After 2 hrs. at 120°C | at 23°C | at 23°C | at -40°C |
| $F_{max}$ (N) | 169 | 233 | 206 |
| En.abs (KJ/m²) | 2.03 | 3.12 | 2.55 |
| After 30 days at 120°C | | | |
| $F_{max}$ (N) | 200 | 272 | 241 |
| En.abs (KJ/m²) | 2.28 | 3.24 | 1.98 |
| After 5 min. at 220°C | | | |
| $F_{max}$ (N) | | 247 | 257 |
| En.abs (KJ/m²) | | 3.64 | 2.99 |

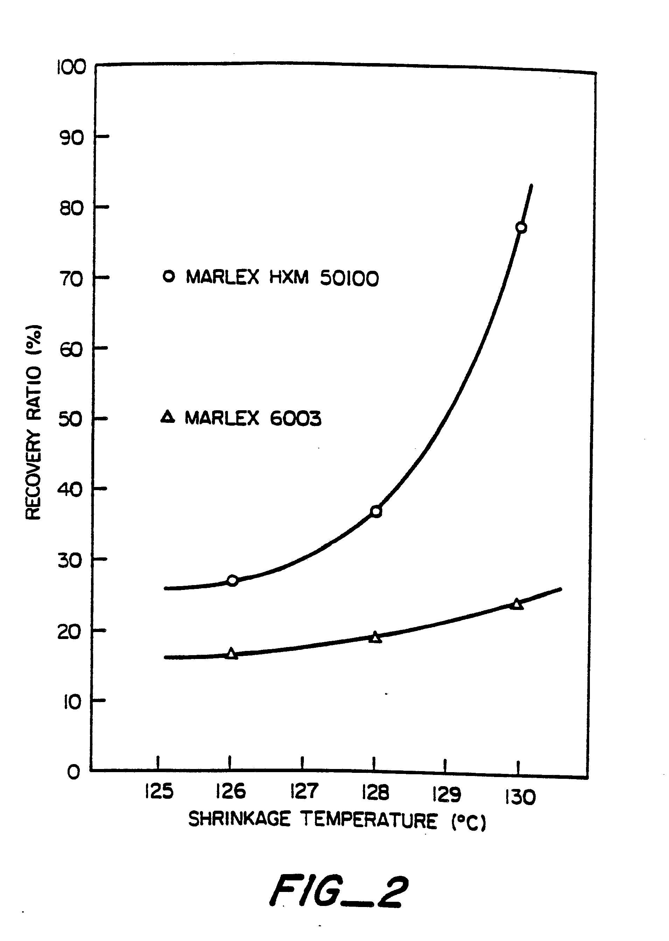

Table 2 below and Figures 1 and 2 summarize the results of tests which were carried out to compare compositions of the invention with compositions which were the same except that a polymer of conventional molecular weight was used. Further details of the tests are given below. The Marlex HXM 50100 used in the compositions of the invention was polyethylene of molecular weight 203,000. The Marlex 6003 used in the prior art compositions was polyethylene of molecular weight 148,000. The percentages given are by weight.

Tensile Testing

About 61% of the polymer, about 38% of carbon black (Furnex N 765) and about 1% of antioxidant were compounded in a Banbury mixer. The compositions were extruded into sheets 0.07 cm thick.

(a) Tensile samples (dogbones) were stamped out of these sheets along the transverse (to extrusion) direction and tested at room temperature on an Instron Tensile Testing Machine at a crosshead speed of 2.54 cm/minute.

(b) The sheets were rendered recoverable by stretching them to 100% elongation at 120°C, and then cooling them to room temperature. Dog bone samples were stamped out of the stretched sheets along the transverse (to orientation) direction and these samples were subjected to tensile testing at both room temperature and 90°C, at a crosshead speed of 1.27cm/minute. This test gives an indication of the split resistance of the polymer since, in general, splitting occurs transverse to the stretching direction.

Peel Tests

About 57% of the polymer, about 42% of carbon black, and about 1% of antioxidant were compounded on a Banbury mixer. The compounded material was pressed into slabs at 205°C. The material was allowed to preheat for 1 minute under low pressure, the pressure was then increased to 58 kg/cm$^2$, and the material was held under pressure at 205°C for 4 minutes, then placed in a cold press under 58 kg/cm$^2$, and allowed to cool to room temperature. 2.54 x 2.54 cm samples were cut from the resulting slabs and placed between two flexible polyethylene substrates (7.6 x 2.5 x 0.13 cm). The samples were bonded using standard lap shear/peel fixture and conditions, where weights weighing 0.334 lbs. were placed on the samples, and the samples were then placed in an oven preheated to 150°C and allowed to heat for 30 minutes before being removed from the oven and allowed to cool at room temperature (ASTM No. D1876-72). The peel samples were pulled in an Instron tester at room temperature, at crosshead speed of 2.54 cm/minute. The peak force values (lbs-linear inch) were recorded.

Table 2

|  | Marlex 6003 | Marlex HXM 50100 |
|---|---|---|
| Elongation to break(%) |  |  |
| (a) | < 5 | 300 |
| (b) at room temp. | < 5 | 250 |
| at 90°C | < 5 | 300 |
| Peel Tests (lb/inch) |  |  |
| Sample No. 1 | 2.0* | 23.6 |
| 2 | 2.0* | 17.5 |
| 3 | 2.0* | 14.3 |
| 4 | 5.0 | 23.1 |
| 5 | 2.2 | 16.0 |

* abrupt cohesive failure

Resistivity Behaviour Tests

About 57% of Marlex HXM 50100, about 42% of carbon black (Furnex N 765) and about 1% antioxidant were compounded on a Banbury mixer. About 61% of Marlex 6003, about 38% of carbon black (Furnex 765) and about 1% antioxidant were compounded on a Banbury mixer.

Different filler loadings were used in the Marlex HXM 50100 and the Marlex 6003 to give compositions having similar resistivities at room temperature, in order to standardize the comparative test.

The resistance vs. temperature characteristics of each of the compositions are shown in Figure 1. Both compositions have similar autotherm heights, but above their melting points (peak resistivity) their behavior is very different. Above the melting point, the resistivity of the composition according to the present invention remains constant with increasing temperature, while that of the lower molecular weight polymer decreases rapidly. The behavior of the composition according to the invention is preferred to that of the lower molecular weight polymer in PTC devices, since an "overload" condition in a device comprising the lower molecular weight polymer would cause a rapid increase in temperature and probable failure.

Recovery Behavior Tests

About 63% of the polymer, about 36% of carbon black (Furnex N 765) and about 1% of antioxidant were compounded on a Banbury mixer. The materials were extruded into sheets about 0.076 cm. thick, and strips of 2.5 cm. width were stamped from the sheets and stretched 300% at 125°C. The stretched specimens were shrunk freely in a glycerine bath controlled to ± 1°C and the percentage relative recovery values calculated from the following equation

$$\% \text{ Relative Recovery} = \frac{E - R}{E - I} \times 100$$

where

E = Expanded length
R = Recovered length
I = Initial length (prior to expansion)

The results of the test are shown graphically in Figure 2, from which it can be seen that the recovery ratios attained is significantly higher with the HMWPE based formulation.

The tensile, peel, resistivity behavior and recovery tests show significantly improved properties for a polymer having a molecular of 203,000 compared to one having a molecular weight of 148,000, and the improvements are much greater than would have been predicted on the basis of the difference in molecular weights.

The compositions of the invention may be used in a variety of different applications. In one preferred embodiment a heat-recoverable composition is shaped into an article that can be used to join, reinforce or repair two or more substrates (see in particular the application corresponding to U.S. Serial No. 720,117 (MPO922). The compositions are also useful in, for example, circuit protection devices, heaters, including strip heaters and sheet heaters, intrinsically heated recoverable sheets, and sensors.

The new compositions often exhibit what is known as PTC (positive temperature coefficient) behavior. However, they can also exhibit, at least in some temperature ranges ZTC (zero temperature coefficient) behavior or NTC (negative temperature coefficient) behavior.

For certain applications, for example where the composition is to be used as an article for forming, repairing or reinforcing substrates, the compositions prferably has a resistivity at 23°C of 0.1 to 500, eg. 0.5 to 100, ohm.cm.

For some applications, the composition preferably contains less than 50 wt % of carbon black or other conductive filler. For certain applications, for example where the composition is to be used as an article for joining, repairing, reinforcing or otherwise modifying a substrate, the composition preferably contains less than 26 wt%, more preferably less than 24 wt%, especially preferably 18 to 24 wt% of carbon black or other conductive filler. The above mentioned preferred filler contents are especially preferred when the polymer comprises HMW polyethylene.

The compositions may be made into articles of any desired shape, the preferred shape and dimensions of the article depending on their intended use. For some applications, for example where the article is to be used to join, reinforce, repair or otherwise modify substrates, the preferred shape is tubular. For tubular articles, the ratio of the diameter of the article to wall thickness is preferably less than 18:1, e.g. 2:1 to 12:1, after recovery. Preferably the wall thickness (prior to shrinkage) of the article, whatever its shape, is at least 0.18 cm, preferably at least 0.25 cm, in order to ensure adequate strength to resist mechanical stresses and internal pressures. It is also often desirable that the articles should continue to generate heat at a high rate even at their recovery temperature, for example to promote rapid softening of the outer surface of a plastic

5

pipe without softening the inner surface of the pipe. For this reason, it is preferred that the composition should not exhibit PTC behavior at temperatures up to and slightly above (e.g. up to 50°C above) the recovery temperature; a change in resistivity by a factor of less than 5, preferably less than 2, over the temperature range 23°C to (TR-50)°C, where TR is the recovery temperature, is preferred. in one useful embodiment the composition of the invention is shaped into a coupler, preferably a heat-recoverable coupler, which is used to join two or more pipes. The pipes can be the same or different in size, for example diameter, and can be the same or different in composition. The ends of the pipes can be joined, or one or more can be connected as branches to another pipe, usually of larger diameter.

The compositions of the present invention may be used, alone or in combination with other compositions, to form articles which may or may not be recoverable. The heat-recoverable article may comprise two or more layers. The layers may be made from the same materials, but are preferably made from different materials. In a preferred embodiment where the article is tubular, for example where it is to be used as a recoverable coupler by joining substrates, one of the layers comprises an organic polymer and dispersed therein a particulate conductive filler, which layer is arranged to generate heat by the passage of current therethrough, and the other layer comprises a non conductive material selected according to the desired purpose of that layer. The layer containing the conductive filler may be located within the non conductive polymeric layer, or vice versa. Where the filler loaded layer provides the inner layer heat to cause bonding to an underlying substrate heat need be provided only at the article/substrate interface. This advantageously reduces the amount of heat needed to recover the article. In this arrangement the outer non conductive layer may be selected from an appropriate material to act as an insulation layer, reducing the cooling effect of the environment. This further reduces the heat needed to recover the article, and also makes the quantity of heat required more independent of the ambient temperature. The outer layer may also, or instead, act as a support or reinforcing layer, for example, it may be made from a tougher material than the inner, filled, conductive layer, to improve the impact properties of the article. In the reverse arrangement, where the non conductive polymeric layer is located within the layer containing conductive filler, the inner non conductive layer is advantageously selected to be compatible with the underlying substrate so as to form a good bond thereto. The inner layer may, for example, comprise a non cross-linked polymer which will readily flow and fuse to the underlying substrate. For example in the case of coupling polyethylene pipes the inner layer may comprises non cross-linked polyethylene.

The double or multilayer heat-recoverable article may be made by any suitable fabrication technique. For example the layer may be coextruded or co-moulded and then the formed double or multi layer article preferably expanded as a whole. in arrangements where the inner layer (which is the most expanded layer in a tubular construction) is a non conductive polymeric layer, it preferably comprises an unfilled polymeric material such that is can withstand high expansion ratios. With such arrangements very high expansion ratios of the order of 1.5 can be achieved.

The invention is illustrated by the following Example.

## Example

HMWPE pellets (Marlex HXM 50100 available from Phillips Chemical Co.), 75 wt%, having a molecular weight of about 200-300,000, and carbon black (Ketjenblack EC, available from AKZO Chemie), 24 wt%, and antioxidant, 1 wt%, were thoroughly mixed together using conventional compounding, e.g. using a Banbury, two roll mill and pelletizing extruder. The compound was continuously extruded to an annular cross-section (inner diameter 2.25 cm, outer diameter 3 cm).

The extruded product was then rendered heat-shrinkable by expanding it at 120°C to an inner diameter of about 3 cm. Silver paint electrodes were painted on to the annular ends of the expanded product. The resistivity of the conductive polymer was about 0.5 to 2.0 ohm.cm.

The product was used to couple together two polyethylene pipes having an outer diameter of about 2.13 cm and a wall thickness of about 0.28 cm. The ends of the pipes were placed within the coupler, the pipe ends being butted together at the center of the coupler. The silver paint electrodes were connected to a 24 volt AC power supply by means of metal plates which were spring-loaded in the axial direction. The coupler heated up and when it reached its shrinkage temperature (after about 30-45 seconds) it shrank into contact with the pipes. The spring-loaded metal plates maintained electrical contact with the coupler as it shrank. Current was passed through the coupler for another minute, and this resulted in fusion of the pipes to the coupler.

After cooling, the joint was tested by maintaining it at an internal pressure of about 8.4 kg/cm$^2$ and a

temperature of about 80°C; there was no leakage from the joint after 500 hours, when the test was discontinued. A pull-out test was conducted at room temperature, and was terminated when yielding of the pipes occurred, at which time the joint remained sound.

## Claims

1. A composition which can be melt-processed and which comprises (i) an organic polymer having a molecular weight greater than 150,000 and (ii) a particulate conductive filler dispersed in the polymer.

2. A composition according to claim 1, wherein the organic polymer comprises at least 70% by weight of polyethylene having a molecular weight of 200,000 to 400,000.

3. A composition according to claim 1 or 2 which has a resistivity at 23°C of 0.5 to 100 ohm.cm.

4. A composition according to any one of the preceding claims wherein the conductive filler is carbon black and is present in amount less than 50%.

5. A shaped article prepared by melt-shaping a composition as claimed in any one of the preceding claims.

6. An article according to claim 5 wherein the composition has been cross-linked.

7. An article according to claim 6 wherein the composition has been cross-linked by radiation.

8. An article according to any one of claims 5 to 7 which is heat-recoverable.

FIG__1

FIG_2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 123 540 (RAYCHMEN) <br> * Claims 1-9 * <br> ----- | 1 | H 01 B 1/24 <br> C 08 K 3/04 <br> B 29 C 67/12 <br> B 29 C 61/00 |

TECHNICAL FIELDS SEARCHED (Int. Cl.4)

A 01 B 1

The present search report has been drawn up for all claims

| Place of search | Date of completion of the search | Examiner |
|---|---|---|
| THE HAGUE | 25-01-1990 | DROUOT M.C. |